# EUROPEAN PATENT SPECIFICATION

(11) **EP 3 063 633 B1**
(45) Date of publication and mention of the grant of the patent: **29.12.2021**
(21) Application number: 13896407.7
(22) Date of filing: 31.10.2013
(51) Int. Cl.: G06F 11/30, G06F 3/12, G06F 3/048

(54) **MONITORING PRINTERS**
ÜBERWACHUNG VON DRUCKERN
SURVEILLANCE D'IMPRIMANTES

(43) Date of publication of application: 07.09.2016
(73) Proprietor: Ent. Services Development Corporation LP, Houston, TX 77070 (US)
(72) Inventor: SHETH, Nilay Shashikant, Plano, Texas 75024 (US); KAILASAM, Sivakumar Neelamegam, Chennai 600116 (IN); KRISTAM,Raghavendra, Chennai 600032 (IN)
(74) Representative: Prock, Thomas
(86) International application number: PCT/US2013/067685
(87) International publication number: WO 2015/065408

(56) References cited:
- EP-B1- 2 135 157
- US-A1- 2003 142 347
- US-A1- 2003 223 092
- US-A1- 2010 039 662
- US-A1- 2011 213 848
- US-B1- 6 259 532
- US-B1- 7 313 613

## Description

### Technical Field

Embodiments described herein relate to methods, systems and computer-readable mediums with instructions for identifying statuses of monitored PECTAB printers.

### Background

Business processes may be a factor in the operational success of an organization. The business processes may utilize printers to provide tangible sources of information. As such, the organization may have an interest in ensuring that the printers operate properly (e.g., as intended). Therefore, the organization may evaluate issues associated with a printer.

US patent US 7313613 B1 discloses a system and method facilitating network diagnostics and self-healing including a data stream monitor component adapted to selectively copy protocol specific subset(s) of raw network data and provide the subset(s) of data to a diagnostics engine.

US patent application US 2003/142347 A1 discloses an information technology network including a plurality of printers, at least two of which run a distributed print management program that operates to monitor all network traffic by snooping.

According to aspects there are provided a non-transitory computer-readable medium as claimed in Claim 1, a system as claimed in Claim 4 and method as claims in Claim 8.

### Brief Description of the Drawings

Figure 1 illustrates an example of an environment in which various examples can be implemented for monitoring printers according to the present disclosure.
Figure 2 illustrates a diagram of an example of a user interface (Ul) according to the present disclosure.
Figure 3A illustrates a diagram of an example of a system for monitoring printers according to the present disclosure.
Figure 3B illustrates a diagram of an example of a computing device for monitoring printers according to the present disclosure.
Figure 4 illustrates a flow diagram of an example of a method for monitoring printers according to the present disclosure.

### Detailed Description

An organization may employ printers to perform various aspects of its business processes. With increasing pressure on organizations, such as airlines, to improve their performance, the organizations may seek to increase efficiencies related to hardware supporting their business processes, for instance, by pursuing efficient monitoring of the printers.

Printers can include parametric table (PECTAB) printers. PECTAB printers refer to printers, such as boarding pass printer and/or bag tag printers, which rely on a parameter table to decipher formatted data i.e., PECTAB data. The PECTAB data can, for example, be received from a departure control system (DCS), among other sources of PECTAB data. The DCS can act as a central depository, providing PECTAB data to one or more businesses processes within the organization, such as PECTAB data regarding particular passengers, flights, baggage, and/or luggage, etc. For instance, the DCS may to provide formatted flight and/or passenger data to a boarding pass printer to generate a boarding pass. The PECTAB data associated with the PECTAB printers, may be unique for each airline, each airport, and/or may be specified by a group external to the organization such as the Association of European Airlines (AEA). Additionally, PECTAB printers may not provide monitoring capabilities, such as, monitoring traffic associated with a plurality of printers (e.g., PECTAB printers), etc. Variations between PECTAB standards and/or a lack of monitoring capabilities, can make management (e.g., monitoring) of PECTAB printers difficult, costly (e.g., time-consuming), and/or ineffective, among other difficulties.

Such difficulties can be compounded by disjointed and/or disorganized procurement of PECTAB printers by the organization. That is, organizations, such as airlines, may purchase PECTAB printers on an as needed basis and/or when funding permits, rather than purchasing (e.g., upgrading) all PECTAB printers of an organization to a particular type of PECTAB printer. As a result, there may be a plurality of types of PECTAB printers (e.g., makes and/or models of PECTAB printers) in operation for the organization at any given time.

For instance, the various types of PECTAB printers may adhere to various versions of PECTAB. For example, a particular PECTAB printer (e.g., a legacy printer) may employ a comparatively older version of PECTAB compared to PECTAB printer employing a prevailing version (e.g., a current standard adopted by the AEA). Such a legacy printer may experience events (e.g., compatibility events with devices utilizing a comparatively newer version of PECTAB, etc.). Additionally, regardless of a version of PECTAB installed, over the course of an operational lifetime each of the plurality of PECTAB printers experiences events.

An event refers to a change in a status of a printer (e.g., a PECTAB printer). Events can include, for example, running out of paper/ink, initializing a printer, printing a document, receiving a print request, powering on/off, entering "ready" mode (e.g., a mode associated with a printer able to print as intended), experiencing an error (e.g. a paper jam), among other events the correspond to a change in a status of the printer. Occurrence of an event may prohibit a printer from functioning as intended (e.g., being able to print) or signify that a printer is "ready" to print, etc. Accordingly, monitoring printers to ensure proper functionality can be desirable.

However, ensuring proper functionality may be compounded by a delay in identifying an occurrence of the event. For example, identification of an occurrence of an event can be delayed and/or ineffective due to the different types of printers and/or the different versions of PECTAB utilized by printers. For instance, an event, for example, a printer running out of ink or paper, and/or an event associated with a seldom used printer functionality (e.g., dual sided printing) may not be discovered until a print request, such as a particular print request utilizing the seldom used functionality, is requested to the particular printer experiencing the event. Such a delay can add to the above described difficulties the may be associated with management (e.g., monitoring) of PECTAB printers.

In contrast, examples of the present disclosure include methods, systems, and computer-readable and executable instructions for monitoring printers. Monitoring printers can refer to monitoring traffic associated with a plurality of ,PECTAB printers and/or receiving, from the monitored traffic, an indication of a status of a printer of the plurality of printers (e.g., an indication of a printer associated with an event). Such monitoring can promote consistent, efficient, and/or reliable identification, for instance, by identifying an event upon its occurrence (e.g., prior to a print request being sent by a user to the printer experiencing the event), ensuring currency of software/firmware on printers, and/or verify printer compliance with organizational policies, among other advantages.

An occurrence of an event, for instance, can be identified based on a performance standard and/or based upon a service level agreement (SLA), among other ways to identify an occurrence of an event. For example, an event can be based upon a change resulting in an ability to meet a performance standard (e.g., a "ready" status) and/or a change resulting in an inability to meet a performance standard (e.g., an "out of paper" status). Occurrences of such events can be automatically identified, for example, by a remote agent and by self-diagnosis of a printer experiencing an event. However, even in the instance of a printer self-diagnosing an occurrence of an event, a remote agent can monitor traffic to facilitate identifying an indication of the printer associated with event.

Such an indication can include, for example, a location associated with a particular printer, a printer name, a printer make, a printer model, a version of firmware (e.g., a version of PECTAB) utilized by the printer, and/or a status of a printer (e.g., information pertaining to a status of the printer), among other information. Statuses can correspond to events, such as those described herein. For example, an event (e.g., a printer running out of paper) can have a corresponding status associated with the printer (e.g., an "out of paper" status). Such a status (e.g., information that identifies a particular status) can be received from traffic. Traffic refers to network traffic (e.g., packets) to and/or from the plurality of printers. For example, the traffic can include print requests (e.g., print requests sent to an initialized printer), printer responses (e.g. updates corresponding to the progress of a printer job), various information associated with an indication of a printer experiencing an event, initialization information, among other types of traffic. Traffic to the printer passes through a remote agent, as described herein, which can monitor the traffic, for instance, to identify a status of a printer.

In the following detailed description of the present disclosure, reference is made to the accompanying drawings that form a part hereof, and in which is shown by way of illustration how examples of the present disclosure can be practiced. These examples are described in sufficient detail to enable those of ordinary skill in the art to practice the examples of this disclosure, and it is to be understood that other examples can be utilized and that process, electrical, and/or structural changes can be made without departing from the scope of the present invention as defined by the claims.

As will be appreciated, elements shown in the various examples herein can be added, exchanged, and/or eliminated so as to provide a number of additional examples of the present disclosure. In addition, the proportion and the relative scale of the elements provided in the figures are intended to illustrate the examples of the present disclosure, and should not be taken in a limiting sense. As used herein, "a number of" an element and/or feature can refer to one or more of such elements and/or features. In addition, "for example" and similar phrasing is intended to mean, "by way of example and not by way of limitation".

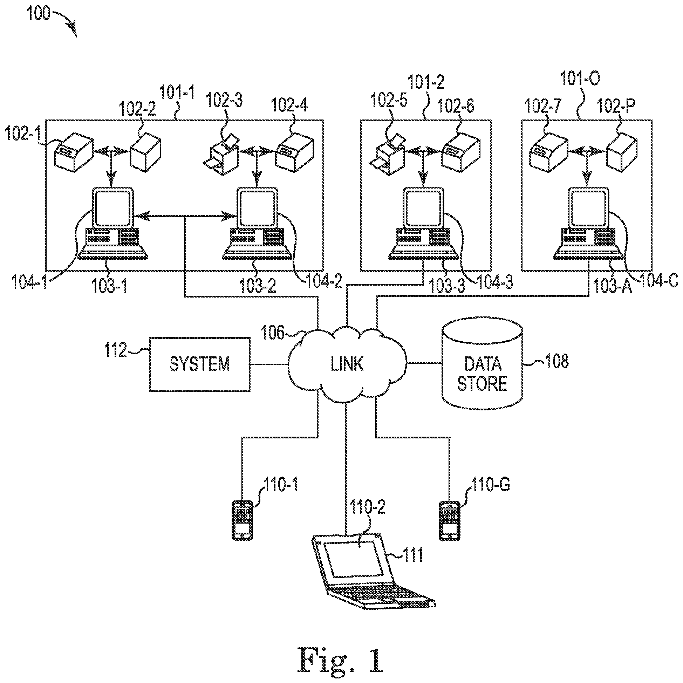

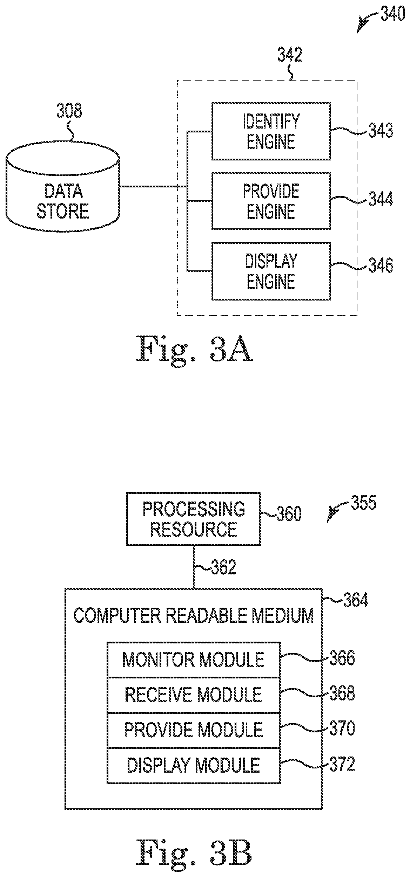

Figure 1 illustrates an example of an environment 100 in which various examples can be implemented for monitoring printers according to the present disclosure. The environment 100 is shown to include a system 112 for monitoring printers, offices 101-1, 101-2, ..., 101-O, printers 102-1, 102-2, 102-3, 102-4, 102-5, 102-6, 102-7, ..., 102-P, remote agents 103-1, 103-2,..., 103-A, workstations 104-1, 104-2, 104-3, ..., 104-C, support devices 110-1, 110-2,..., 110-G, a data store 108, and a link 106. The data store 108 can be analogous to those discussed with respect to Figure 3A. The system 112 can include a computing device analogous to those discussed with respect to Figure 3B.

Monitoring printers is performed using a workstation, such as workstations 104-1,..., 104-C and/or remote agents 103-1,..., 103-A. Workstations 104-1, ..., 104-C represent computing devices that can generate/receive electronic data having browsers and/or other applications to communicate such information associated with a printer and/or facilitate monitoring printers, among other abilities. Examples of workstations 104-1, ..., 104-C include desktop/laptop computers, mobile phones, and/or servers, among other devices suitable for monitoring printers. Each of the plurality of printers has a respective workstation corresponding thereto.

The workstations are separate and distinct from the plurality of printers. As described herein, being separate and distinct refers to an environment being physically separate and/or having separate network resources (e.g., network resources to monitor traffic) with respect to each other. In this manner, a workstation can monitor (e.g., remotely monitor) traffic from printers 102-1, ..., 102-P. Such monitoring of printers using a workstation that is separate and distinct from the printer can avoid difficulties associated with legacy printers the may not provide monitoring capabilities, such as, monitoring traffic associated with a plurality of printers (e.g., PECTAB printers), etc., among other advantages.

Remote agents 103-1, ..., 103-A refer to hardware (e.g., a probe, etc.), software, and/or firmware that can communicate with printers, communicate with servers, intercept traffic, and/or monitor printers, among other abilities. Examples of remote agents include plugins (e.g., browser plugins), firmware applications, and/or downloadable software (e.g., downloadable browser instances), among other suitable remote agents for monitoring printers.

Remote agents 103-1, ..., 103-A can include a network monitoring probe (not shown) to collect traffic (e.g., live print traffic). For example, the network monitoring probe can monitor a plurality of printing requests and/or printing responses sent via transmission control protocol/Internet protocol (TCP/IP) on a main communication path that passes through a switch. The network monitoring probe can monitor the traffic, for example, through the switch to extract traffic and/or data (e.g., printer statuses). An identify engine, such as identify engine 343 describe with respect to Figure 3A, can be coupled to the network monitoring probe (e.g., a Real User Monitor (RUM) probe), so as to receive the network traffic (e.g., live network traffic associated with a client-facing server and/or printer) collected by the network monitoring probe. Examples of the present disclosure can include one network monitoring probe or a plurality of network monitoring probes. The network traffic (e.g., print traffic include statuses and/or identifying information associated with a printer) can be collected with the network monitoring probe directly from a network device (e.g., a switch) and/or the network traffic can be mirrored to the identify engine 343.

The identify engine 343 can include a network monitoring application (e.g., a port sniffer) to mirror the traffic. Traffic (e.g., collected print traffic) that is derived from the network monitoring probe, whether by mirroring or other methodology, can be referred to as captured print traffic. Various tools (e.g., computing devices) exist to collect print traffic (e.g., TCP packets), process the captured network traffic (e.g., for business analysis, status identification, or other use), and/or provide various reports based on the captured network traffic.

The network monitoring probe and the identify engine 343 (e.g., computing device) and/or a network monitoring application can be coupled in a wired or wireless manner. The network monitoring probe and/or the network monitoring device can be a discrete computing device having a processing resource and memory resources. The network monitoring application can be an application running on a separate computing device such as a server, router, switch, printer, etc., or can be provided by another implementation.

Offices 101-1, ..., 101-O refer to physical locations housing printers. Printers 102-1,..., 102-P include parametric table (PECTAB) printers. PECTAB printers 102-1,..., 102-P refer to printers that utilize PECTAB to perform some or all of their respective operations (e.g., printing, receiving data, sending data, etc.). Non-PECTAB printers refer to printers that do not utilize PECTAB to perform operations. In various examples, the printers 102-1, ..., 102-P can include a plurality of PECTAB printers (e.g., a plurality of types of PECTAB printers). Examples of PECTAB printers can include automated ticketing and boarding (ATB) printers, boarding pass printers, and/or bag tag printers, among others.

A boarding pass printer can include a magnetic stripe encoder for encoding information in a magnetic stripe carried by a boarding pass and/or a print head (e.g., thermal, ink jet, etc.) to print human readable information (e.g., on one or both sides of the boarding pass), among other ways to provide information to the boarding pass. For instance, the boarding pass printer can, in some examples, print two-dimensional barcodes (e.g., matrix code and/or area code symbols) on a boarding pass. The information (e.g., barcode) on the boarding pass can identify a passenger, airline, and/or flight number, etc. Similarly, a bag tag printer can include a magnetic stripe encoder and/or a print head to print information, among other ways to provide information to a bag tag, The information (e.g., barcode) on the bag tag can associate luggage with the passenger, etc.

The support devices 110-1, ..., 110-G represent computing devices that can generate and/or receive electronic data associated with printers having browsers and/or other applications to communicate such information, among other abilities. The support devices 110-1,..., 110-G include a graphical user interface (GUI) 111. Similarly, the workstations 104-1,..., 104-C and/or servers, such as those described herein, can include an electronic display (not shown) suitable for display of electronic data.

A user interface (UI) can include hardware components and/or computer-readable instruction components. For instance, hardware components can include input components (e.g., a mouse, a touch screen, and a keyboard) and/or output components (e.g., a display). An example UI can include a GUI. A GUI can, for example, electronically represent an indication of a printer associated with an event (e.g., a name, type, location, make, and/or component identification number of a printer associated with an event, among others). That is, in some examples, an indicator can be displayed by a UI of a support device. For example, the indicator can be a numeric indicator, a textual indicator, a pop-up window, and/or a particular color (e.g., display of the color green to indicate a particular printer has a "normal/'ready" status and/or is not indicated as associated with an event), among other possible types of indicators. Conversely, a red color can be displayed to indicate a particular printer has been associated with an event. Such displays can facilitate interactions between a user and a computer (e.g., allows a user to interact with a computer using images and/or text).

Link 106 (e.g., a network) represents a cable, wireless, fiber optic, and/or remote connection via a telecommunication link, an infrared link, a radio frequency link, and/or other connectors or systems that provide electronic communication. That is, the link 106 can, for example, include a link to an intranet, the Internet, or a combination of both, among other communication interfaces. The link 106 can also include intermediate proxies, for example, an intermediate proxy server, routers, switches, load balancers, and the like.

The link 106 includes an intermediate asynchronous protocol server, for example, a java-based server such as an extensible messaging and presence protocol (XMPP) server (not shown) and/or an application server (not shown). The asynchronous protocol server can communicate by an asynchronous protocol with a remote agent, such as those described herein, the application server, and/or a data store (e.g., data store 108) to promote monitoring printers. For instance, a status can be provided (e.g., by the remote agent) to a java-based server (e.g., a XMPP server and/or a Java 2 Platform Enterprise Edition (J2EE) server) capable of storing a status (e.g., an identified current status) of the printer. However, the present disclosure is not so limited. That is, link 106 can represent a physical connection between the workstations 104-1, ..., 104-C and the support devices 110-1, ..., 110-G to communicate instructions (e.g., instructions to generate a UI) between the support devices, the intermediate server, the application server, and/or the data store 108. For example, an application server can, in some examples, communicate via a synchronous protocol (e.g., hypertext transfer protocol) with the support devices and/or the data store, among others.

In some examples, the link 106 can represent a common abstraction layer. That is, the printer 102-1,..., 102-P, the remote agents 103-1, ..., 103-A, the workstations 104-1, ..., 104-C, and/or the support devices 110-1 110-G, among other devices, can be included on a common abstraction layer. Such commonality can promote monitoring of printers, as described herein.

The system 112 for monitoring printers can represent different combinations of hardware and instructions to monitor printers. The system 112 for monitoring printers can include a computing device (not shown), for instance, computing device 355 as discussed with respect to Figure 3B.

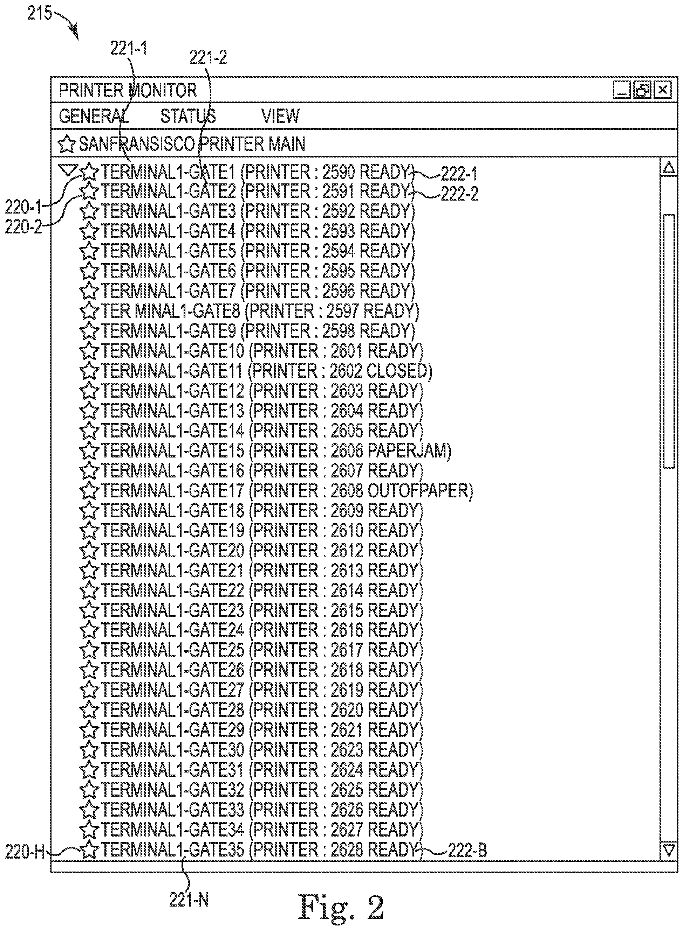

Figure 2 illustrates a diagram of an example of a UI 215 according to the present disclosure. The UI 215 can be displayed via a display of a support device upon, for example, a status of a printer can be displayed in response to an occurrence of an event and/or upon receipt of an indication of a printer associated with the event. As illustrated in Figure 2, the UI 215 can include a plurality of electronic representations 220-1, 220-2, ..., 220-H, a plurality of names 221-1, 221-2,..., 221-N, and/or a plurality of statuses 222-1, 222-2,..., 222-B corresponding to a plurality of printers, among other displayed items included in the UI. While Figure 2 depicts a simultaneous display of a particular total number of printers located at a various locations, the present disclosure is not so limited. That is, a total number of the plurality of printers, a number of locations, a naming convention (e.g., a legend), a name (e.g., a location as a name), and/or a respective types of statuses displayed are not so limited. Rather, the displayed items (e.g., the a plurality of electronic representations 220-1, ..., 220-H, etc.) illustrated in Figure 2 can be varied and/or include more of less displayed items to promote monitoring printers, as described herein.

The plurality of electronic representations 220-1, ..., 220-H, the plurality of names 221-1, ..., 221-N, and/or a plurality of statuses 222-1 222-B can each have a functionality (e.g., a respective functionality) associated therewith. For example, selection of an electronic representation (e.g., 221-1) may cause the UI to perform an action (e.g., display a drop down menu, display a free text area, display a drill down menu, and/or cause an application utilizing the UI to perform a function). That is, the plurality of electronic representations 220-1, ..., 220-H, the plurality of names 221-1, ..., 221-N, and/or a plurality of statuses 222-1 222-B can facilitate a user to interact with the UI (e.g., provide an input to cause the UI to perform the functionality).

Figure 3A illustrates a diagram of an example of a system 340 for monitoring printers according to the present disclosure. The system 340 can include a data store 308 (e.g., analogous to data store 108 as referenced in Figure 1), a monitoring system 342, and/or a number of engines. The monitoring system 342 can be in communication with the data store 308. The monitoring system 342 can include a number of engines (e.g., identify engine 343, provide engine 344, display engine 346, etc.). The monitoring system 342 can include additional or fewer engines than illustrated to perform the various functions described herein.

The number of engines can include a combination of hardware and programming to perform a number of functions described herein (e.g., identify, from traffic associated with a plurality of PECTAB printers monitored by remote agents, an indication of a PECTAB printer associated with an event and/or provide the indication, via an asynchronous message protocol, to a GUI, etc.). Each of the engines can include hardware or a combination of hardware and programming designated or designed to execute a module (e.g., a particular module). The programming can include instructions (e.g., software, firmware, etc.) stored in a memory resource (e.g., computer-readable medium) as well as a hard-wired program (e.g., logic).

The identify engine 343 can include hardware and/or a combination of hardware and programming to identify, from traffic associated with a plurality of PECTAB printers monitored by remote agents, an indication of a PECTAB printer, within the plurality of PECTAB printers, associated with an event, such as those described herein. Such an indication can be received by a receive engine (not shown) and can include, for example, a current status of the PECTAB printer and/or corresponding identifying information associated with the PECTAB printer.

A current status refers to a comparatively most recent status (e.g., most recent information pertaining to a status) identified by the identify engine. The current status can be stored in an intermediate sever, an application server, and/or a data store (e.g., data store 308). In some examples, storing the current status can include replacing the previous status (e.g., a status immediately prior to the current status) with the current status. In some examples, the current status can be stored along with a plurality of other status, for instance, in chronological order based on a time of identification associated with each of the respective statuses.

Identifying information refers to information that can identify a particular printer and/or particular aspects of the printer. Identifying information can include information pertaining to a type (e.g., a make and/or model) of a printer, a location associated with a printer, a name, and/or a component identifier, among other identifying information associated with a printer. The identifying information can include information providing a timeframe i.e., a time (e.g., such as day, month, etc.) associated with identification of a status. Such a timeframe can promote the chronological ordering of statues described above.

The identify engine 343 can include and/or can be in communication with a monitoring engine (not shown) that can monitor traffic associated with the plurality of PECTAB printers, among other monitoring capabilities. In some examples, the plurality of PECTAB printers can include a plurality of versions of firmware. For instance, each of the PECTAB printers can include a respective version of firmware installed thereon. Consequently, the PECTAB printers may have a single version of firmware installed on each of the PECTAB printers, identifying, can in some examples, include implementing the identify engine 343 to identify information that identifies a version of firmware corresponding to the PECTAB printer (e.g., the single version of firmware installed on the PECTAB printer).

The identify engine 343 can identify the indication of a PECTAB printer associated with an event upon request (e.g., a request initiated by an information technology administrator) and/or automatically upon an occurrence of an event (e.g., immediately following occurrence of an event upon detection by a printer). In some examples, identify engine 343 can include instructions executable by a processing resource to identify the indication of the PECTAB printer associated with the event from traffic associated with the plurality of ATB printers, such as those described herein. For example, the plurality of printers can, in some examples, include only PECTAB printers and not any non-PECTAB printers.

The provide engine 344 can include hardware and/or a combination of hardware and programming to provide the indication, via an asynchronous message protocol, to a GUI. In some examples, the provide engine 344 can provide the indication without a user input request. For example, the provide engine 344 can provide the indication automatically via the asynchronous message protocol, to the GUI upon receipt of the indication from the identify engine 343. Monitoring printers without reliance on

In some examples, the provide engine 344 can provide the indication, via the asynchronous message protocol (e.g., via an asynchronous message protocol server), to a data store (e.g., data store 308) that can store the current status, previous statuses, and/or identifying information associated with a PECTAB printer. For instance, the data store can store the current status by replacing a previous status of the PECTAB printer stored in the data store with the current status of the PECTAB printer.

The display engine 346 can include hardware and/or a combination of hardware and programming to cause a display {e.g., cause the display without a user request/user input). In various examples, the display engine can include instructions executable by the processing resource to implement the display engine 346 to cause the display, via the GUI, of the information pertaining to a current status of the PECTAB printer and/or the corresponding identifying information associated with the PECTAB printer.

Figure 3B illustrates a diagram of an example of a computing device 355 for monitoring printers according to the present disclosure. The computing device 355 can utilize software, hardware, firmware, and/or logic to perform a number of functions described herein.

The computing device 355 can be a combination of hardware and executable instructions for monitoring printers. The hardware, for example can include a processing resource 360 and/or a memory resource 364 (e.g., computer-readable medium (CRM), data store, etc.) A processing resource 360, as used herein, can include a number of processors capable of executing instructions stored by a memory resource 364. Processing resource 360 can be integrated in a single device or distributed across multiple devices. The instructions (e.g., computer-readable instructions (CRI)) can include instructions stored on the memory resource 364 and executable by the processing resource 360 to implement a desired function (e.g., monitor traffic associated with a plurality of printers, etc.).

The memory resource 364 can be in communication with a processing resource 360. A memory resource 364, as used herein, can include a number of memory components capable of storing instructions that can be executed by processing resource 360. Such memory resource 364 can be a non-transitory CRM. Memory resource 364 can be integrated in a single device or distributed across multiple devices. Further, memory resource 364 can be fully or partially integrated in the same device as processing resource 360 or it can be separate but accessible to that device and processing resource 360. Thus, it is noted that the computing device 355 can be implemented on a support device and/or a collection of support devices, on a workstation and/or a collection of workstations, and/or on a combination of the support devices and the workstations.

The memory resource 364 can be in communication with the processing resource 360 via a communication link (e.g., path) 362. The communication link 362 can be local or remote to a computing device associated with the processing resource 360. Examples of a local communication link 362 can include an electronic bus internal to a computing device where the memory resource 364 is one of volatile, non-volatile, fixed, and/or removable storage medium in communication with the processing resource 360 via the electronic bus.

The memory resource 364 can include a number of modules such as a monitor module 366, a receive module 368, a provide module 370, and a display module 372, etc. The number of modules 366, 368, 370, 372 can include CRI that when executed by the processing resource 360 can perform a number of functions. The number of modules 366, 368, 370, 372 can be sub-modules of other modules. The monitor module 366 and the receive module 368 can be sub-modules and/or contained within the same computing device. In another example, the number of modules 366, 368, 370, 372 can comprise individual modules at separate and distinct locations (e.g., CRM, etc.).

Each of the number of modules 366, 368, 370, 372 can include instructions that when executed by the processing resource 360 can function as a corresponding engine, including those as described herein. For example, the monitor module 366 can include instructions that when executed by the processing resource 360 can function as a monitor engine (not shown), for instance, to monitor traffic associated with a plurality of printers.

A receive module 368 can include instructions that when executed by the processing resource 360 can function as a receive engine (not shown) to receive, from the monitored traffic, an indication of a printer (e.g., a PECTAB printer) associated with an event. Such an indication can include information (e.g., status information) pertaining to a status of the printer and/or corresponding identifying information associated with the printer, among other information.

The provide module 370 can include instructions that when executed by the processing resource 360 can function as the provide engine 344 (e.g., as shown in Fig. 3A) to provide the indication, via an asynchronous message protocol, to a graphical user interface (GUI). The display module 368 can include instructions that when executed by the processing resource 360 can function as the display engine 346 (e.g., as shown in Fig. 3A) to cause a display, via the GUI, of the status of the PECTAB printer (e.g., a current status of the PECTAB printer), among other information.

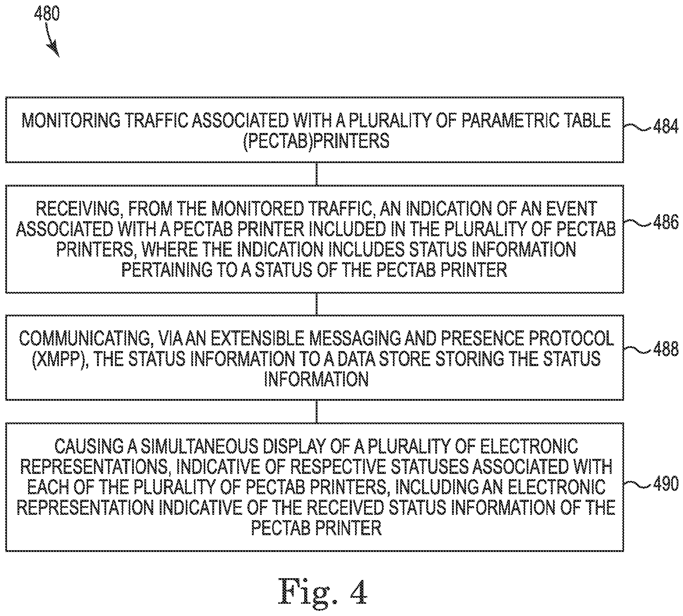

Figure 4 illustrates a flow diagram of an example of a method for monitoring printers according to the present disclosure. As shown at block 484, in various examples, the method 480 can include monitoring traffic associated with a plurality of PECTAB printers. In some examples, the monitoring can include monitoring traffic associated with a plurality of types of PECTAB printers. That is, the plurality of PECTAB printers can include a plurality of types of PECTAB printers.

Information can be identified from the monitored traffic. For instance, as shown at block 486, the method can include receiving, from the monitored traffic, an indication of an event associated with a PECTAB printer included in the plurality of PECTAB printers, where the indication includes status information pertaining to a status of the PECTAB printer. In various examples, the method 480 includes communicating, via an asynchronous messaging protocol, for instance, an extensible messaging and presence protocol (X PP), the status information to a data store (e.g., a relation database) storing the status information, as shown at block 488.

The method 480 can include causing a simultaneous display of a plurality of electronic representations, indicative of respective statuses associated with each of the plurality of PECTAB printers, including an electronic representation indicative of the received status information of the PECTAB printer, as shown at block 490. A simultaneous display refers to displaying the statuses (e.g., current statuses) of a plurality of PECTAB printers at the same time via an individual device (e.g., a single GUI of the individual device). An example of such a simultaneous display is detailed with respect to Figure 2 herein.

Causing can include executing (e.g., executing by a processing resource) instructions stored in memory to directly cause a support device to display, electronic representations, indicative of respective statuses associated with each of the plurality of PECTAB printers and/or to communicate data with an expectation that it be processed by another device to cause the support device to display the electronic representations, indicative of respective statuses associated with each of the plurality of PECTAB printers. Similarly, blocks 484, 486, 488, and 490 can include executing instructions stored in memory to perform the examples of the method described therein.

In some examples, the method 480 can include remediating the event based upon the display of the electronic representation indicative of the status information. Remediation refers to restoration of a non-event status (e.g., a status of a printer in compliance with an SLA). For example, in the event a printer is out of paper an electronic representation may be displayed to indicate an "out of paper" status of the printer. Such a display, can lead to a remediation action, such as reinitializing the printer (e.g., providing a particular initialization sequence to a PECTAB printer), ensuring power is supplied to the printer, upgrading firmware of the printer, supplying ink/paper to the printer, among other possible remediations to restore the printer to a non-event (e.g., fully functional) status. For instance, in some examples, the remediation can include reinitializing a PECTAB printer associated with an event.

As used herein, "logic" is an alternative or additional processing resource to execute the actions and/or functions, etc., described herein, which includes hardware (e.g., various forms of transistor logic, application specific integrated circuits (ASICs), etc.); as opposed to computer executable instructions (e.g., software, firmware, etc.) stored in memory and executable by a processing resource. The figures herein follow a numbering convention in which the first digit or digits correspond to the drawing figure number and the remaining digits identify an element or component in the drawing. Similar by a processing resource. The figures herein follow a numbering convention in which the first digit or digits correspond to the drawing figure number and the remaining digits identify an element or component in the drawing. Similar elements or components between different figures may be identified by the use of similar digits. For example, 108 may reference element "08" in Figure, and a similar element may be referenced as 308 in Figure 3.

## Claims

1. A non-transitory computer-readable medium storing instructions which, when executed by processors of a plurality of workstations (104) and of one or more support devices (110), cause:
the processor in a workstation (104) of the plurality of workstations to monitor traffic associated with a plurality of parametric table, 'PECTAB', printers (102) each having a respective one of the plurality of workstations (104) corresponding thereto, the plurality of workstations (104) being separate and distinct from the plurality of printers, and the traffic being monitored at each of the corresponding workstations (104);
the processor of the workstation to receive, from the monitored traffic, an indication of a printer (102) of the plurality of printers;
wherein the indication includes a current status (222) of the printer and identifying information associated with that printer;
the processor of the workstation to provide, via an asynchronous message protocol and an asynchronous message protocol server, the indication to a graphical user interface (215) 'GUI' of a support device (110) of the one or more support devices (110); and
the processor of the workstation to display, via the GUI, the status provided via the asynchronous message protocol.

2. The medium of claim 1, wherein asynchronous message protocol includes an extensible messaging and presence protocol, 'XMPP', and wherein the instructions further include instructions which, when executed by the processor of the workstation, cause the processor to provide the indication via the XMPP to a XMPP server capable of storing the status of the printer (102).

3. The medium of claim 1, wherein the instructions further include instructions which, when executed by the processor of the workstation, cause the processor to implement a remote agent to communicate the indication using an Extensible Messaging and Presence Protocol, 'XMPP', to a GUI (222) of a support device (110).

4. A system (100), comprising processors of a plurality of workstations (104) and of one or more support devices (110) in communication with a non-transitory computer-readable medium having instructions which, when executed by the processors, cause the processors to implement:
at a workstation of the plurality of workstations a monitor engine to monitor traffic associated with a plurality of parametric table, 'PECTAB', printers (102) each having a respective one of the plurality of workstations (104) corresponding thereto, the plurality of workstations (104) being separate and distinct from the plurality of printers, and the traffic being monitored at each of the corresponding workstations (104);
at the workstation an identify engine (343) to identify, from the monitored traffic, an indication of a PECTAB printer (102), within the plurality of PECTAB printers;
wherein the indication includes information pertaining to a current status (222) of the PECTAB printer and identifying information (220) associated with that PECTAB printer (102);
at the workstation a provide engine (344) to provide the indication, via an asynchronous message protocol and an asynchronous message protocol server, to a graphical user interface, 'GUI' of a support device (110) of the one or more support devices (110); and
at one or more support devices a display engine (346) to cause a display, via the GUI, of the information pertaining to a current status of the PECTAB printer (102) and the corresponding identifying information associated with the PECTAB printer.

5. The system (100) of claim 4, wherein the provide engine (344) provides the indication without a user input.

6. The system (100) of claim 4, wherein the plurality of PECTAB printers (102) include a plurality of automated ticketing and boarding, 'ATB', printers, and wherein the instructions which, when executed by the processor of the workstation, cause the processor to implement the identify engine (343) to identify the indication of the PECTAB printer associated with the event from traffic associated with the plurality of ATB printers.

7. The system (100) of claim 4, wherein the identifying information identifies a version of firmware corresponding to the PECTAB printer (102).

8. A method (480), comprising:
monitoring traffic associated with a plurality of parametric table, 'PECTAB', printers (102) each having a respective one of the plurality of workstations (104) corresponding thereto, the plurality of workstations (104) being separate and distinct from the plurality of printers, and the traffic being monitored at each of the corresponding workstations (104);
by the corresponding workstation, receiving, from the monitored traffic, an indication of a printer (102) of the plurality of printers;
wherein the indication includes a current status (222) of the printer and identifying information associated with that printer;
by the corresponding workstation, providing, via an asynchronous message protocol and an asynchronous message protocol server, the indication to a graphical user interface (215) 'GUI' of a support device (110) of the one or more support devices (110); and
displaying, via the GUI, the status provided via the asynchronous message protocol.

## Patentansprüche

1. Nichtflüchtiges computerlesbares Medium, welches Anweisungen speichert, welche, wenn sie durch Prozessoren von einer Mehrzahl von Arbeitsstationen (104) und eine oder mehrere Unterstützungsvorrichtungen (110) ausgeführt werden, Folgendes veranlassen:
Überwachen, durch den Prozessor in einer Arbeitsstation (104) der Mehrzahl von Arbeitsstationen, eines Verkehrs, welcher einer Mehrzahl von Parametertabellen-PECTAB-Druckern (102) zugeordnet ist, welche jeweils eine ihnen entsprechende von der Mehrzahl von Arbeitsstationen (104) aufweisen, wobei die Mehrzahl von Arbeitsstationen (104) getrennt und von der Mehrzahl von Druckern unterschiedlich sind, und wobei der Verkehr an jeder der entsprechenden Arbeitsstationen (104) überwacht wird;
Empfangen, durch den Prozessor der Arbeitsstation, von dem überwachten Verkehr, einer Angabe eines Druckers (102) der Mehrzahl von Druckern;
wobei die Angabe einen aktuellen Status (222) des Druckers und Identifikationsinformationen einschließt, die dem Drucker zugeordnet sind;
Bereitstellen, durch den Prozessor der Arbeitsstation, über ein asynchrones Nachrichtenprotokoll und einen asynchronen Nachrichtenprotokollserver, der Angabe an eine graphische Benutzerschnittstelle (215) (GUI) einer Unterstützungsvorrichtung (110) der einen oder mehreren Unterstützungsvorrichtungen (110); und
Anzeigen, durch den Prozessor der Arbeitsstation, über die GUI, des Status, welcher über das asynchrone Nachrichtenprotokoll bereitgestellt wird.

2. Medium nach Anspruch 1, wobei das asynchrone Nachrichtenprotokoll ein erweiterbares Nachrichten- und Anwesenheitsprotokoll (XMPP) einschließt, und wobei die Anweisungen ferner Anweisungen einschließen, welche, wenn sie durch den Prozessor der Arbeitsstation ausgeführt werden, veranlassen, dass der Prozessor die Angabe über den XMPP an einen XMPP-Server bereitstellt, welcher in der Lage ist, den Status des Druckers (102) zu speichern.

3. Medium nach Anspruch 1, wobei die Anweisungen ferner Anweisungen einschließen, welche, wenn sie durch den Prozessor der Arbeitsstation ausgeführt werden, veranlassen, dass der Prozessor einen entfernten Agenten zum Kommunizieren der Angabe unter Verwendung eines erweiterbaren Nachrichten- und Anwesenheitsprotokolls (XMPP), an eine GUI (222) einer Unterstützungsvorrichtung (110) implementiert.

4. System (100), umfassend Prozessoren einer Mehrzahl von Arbeitsstationen (104) und eine oder mehrere Unterstützungsvorrichtungen (110), welche mit einem nichtflüchtigen computerlesbaren Medium kommunizieren, welches Anweisungen aufweist, welche, wenn sie durch die Prozessoren ausgeführt werden, veranlassen, dass die Prozessoren Folgendes implementieren:
an einer Arbeitsstation der Mehrzahl von Arbeitsstationen, eine Überwachungsmaschine zum Überwachen eines Verkehrs, welcher einer Mehrzahl von Parametertabellen-PECTAB-Druckern (102) zugeordnet ist, welche jeweils eine ihnen entsprechende der Mehrzahl von Arbeitsstationen (104) aufweisen, wobei die Mehrzahl von Arbeitsstationen (104) getrennt und von der Mehrzahl von Druckern unterschiedlich sind, und wobei der Verkehr an jeder der entsprechenden Arbeitsstationen (104) überwacht wird;
an der Arbeitsstation, eine Identifikationsmaschine (343) zum Identifizieren, aus dem überwachten Verkehr, einer Angabe eines PECTAB-Druckers (102) innerhalb der Mehrzahl von PECTAB-Druckern;
wobei die Angabe Informationen, welche sich auf einen aktuellen Status (222) des PECTAB-Druckers beziehen, und Identifikationsinformationen (220) einschließt, welche dem PECTAB-Drucker (102) zugeordnet sind;
an der Arbeitsstation, eine Bereitstellungsmaschine (344) zum Bereitstellen der Angabe, über ein asynchrones Nachrichtenprotokoll und einen asynchronen Nachrichtenprotokollserver, an eine graphische Benutzerschnittstelle (GUI) einer Unterstützungsvorrichtung (110) der einen oder mehreren Unterstützungsvorrichtungen (110); und
an einer oder mehreren Unterstützungsvorrichtungen, eine Anzeigemaschine (346) zum Veranlassen einer Anzeige, über die GUI, der Informationen, die sich auf einen aktuellen Status des PECTAB-Druckers (102) und auf die entsprechenden Identifikationsinformationen beziehen, die dem PECTAB-Drucker zugeordnet sind.

5. System (100) nach Anspruch 4, wobei die Bereitstellungsmaschine (344) die Angabe ohne eine Benutzereingabe bereitstellt.

6. System (100) nach Anspruch 4, wobei die Mehrzahl von PECTAB-Druckern (102) eine Mehrzahl von automatisierten Ticketaustellungs- und Bordkartendruckern (ATB) einschließt, und wobei die Anweisungen, wenn sie durch den Prozessor der Arbeitsstation ausgeführt werden, veranlassen, dass der Prozessor die Identifikationsmaschine (343) zum Identifizieren der Angabe des PECTAB-Druckers implementiert, welcher dem Ereignis aus dem Verkehr zugeordnet ist, welcher der Mehrzahl von ATB-Druckern zugeordnet ist.

7. System (100) nach Anspruch 4, wobei die Identifikationsinformationen eine Firmware-Version identifizieren, welche dem PECTAB-Drucker (102) entspricht.

8. Verfahren (480), umfassend:
Überwachen des Verkehrs, welcher einer Mehrzahl von Parametertabellen-PECTAB-Druckern (102) zugeordnet ist, welche jeweils eine ihnen entsprechende von der Mehrzahl von Arbeitsstationen (104) aufweisen, wobei die Mehrzahl von Arbeitsstationen (104) getrennt und von der Mehrzahl von Druckern unterschiedlich sind, und wobei der Verkehr an jeder der entsprechenden Arbeitsstationen (104) überwacht wird;
Empfangen, durch die entsprechende Arbeitsstation, von dem überwachten Verkehr, einer Angabe eines Druckers (102) der Mehrzahl von Druckern;
wobei die Angabe einen aktuellen Status (222) des Druckers und Identifikationsinformationen einschließt, die dem Drucker zugeordnet sind;
Bereitstellen, durch die entsprechende Arbeitsstation, über ein asynchrones Nachrichtenprotokoll und einen asynchronen Nachrichtenprotokollserver, der Angabe an eine graphische Benutzerschnittstelle (215) (GUI) einer Unterstützungsvorrichtung (110) der einen oder mehreren Unterstützungsvorrichtungen (110); und
Anzeigen, über die GUI, des Status, welcher über das asynchrone Nachrichtenprotokoll bereitgestellt wird.

## Revendications

1. Support lisible par ordinateur non transitoire stockant des instructions qui, lorsqu'exécutées par des processeurs d'une pluralité de stations de travail (104) et d'un ou plusieurs dispositifs de support (110), amènent:
le processeur dans une station de travail (104) de la pluralité de stations de travail à surveiller un trafic associé à une pluralité d'imprimantes (102) à table paramétrique, 'PECTAB', chacune ayant l'une respective de la pluralité de stations de travail (104) lui correspondant, la pluralité de stations de travail (104) étant séparées et distinctes de la pluralité d'imprimantes, et le trafic étant surveillé au niveau de chacune des stations de travail (104) correspondantes;
le processeur de la station de travail à recevoir, à partir du trafic surveillé, une indication d'une imprimante (102) de la pluralité d'imprimantes;
dans lequel l'indication inclut un statut courant (222) de l'imprimante et des informations d'identification associées à cette imprimante;
le processeur de la station de travail à fournir, *via* un protocole de message asynchrone et un serveur de protocole de message asynchrone, l'indication à une interface graphique utilisateur (215) 'GUI' d'un dispositif de support (110) des un ou plusieurs dispositifs de support (110); et
le processeur de la station de travail à afficher, *via* le GUI, le statut fourni *via* le protocole de message asynchrone.

2. Support selon la revendication 1, dans lequel le protocole de message asynchrone inclut un protocole de messagerie et de présence extensible, 'XMPP', et dans lequel les instructions incluent en outre des instructions qui, lorsqu'exécutées par le processeur de la station de travail, amènent le processeur à fournir l'indication *via* le XMPP à un serveur XMPP pouvant stocker le statut de l'imprimante (102).

3. Support selon la revendication 1, dans lequel les instructions incluent en outre des instructions qui, lorsqu'exécutées par le processeur de la station de travail, amènent le processeur à implémenter un agent distant pour communiquer l'indication en utilisant un protocole de messagerie et de présence extensible, 'XMPP', à un GUI (222) d'un dispositif de support (110).

4. Système (100), comprenant des processeurs d'une pluralité de stations de travail (104) et d'un ou plusieurs dispositifs de support (110) en communication avec un support lisible par ordinateur non transitoire ayant des instructions qui, lorsqu'exécutées par les processeurs, amènent les processeurs à implémenter:
au niveau d'une station de travail de la pluralité de stations de travail un moteur de surveillance pour surveiller un trafic associé à une pluralité d'imprimantes (102) à table paramétrique, 'PECTAB', chacune ayant une respective de la pluralité de stations de travail (104) lui correspondant, la pluralité de stations de travail (104) étant séparées et distinctes de la pluralité d'imprimantes, et le trafic étant surveillé au niveau de chacune des stations de travail (104) correspondantes;
au niveau de la station de travail un moteur d'identification (343) pour identifier, à partir du trafic surveillé, une indication d'une imprimante à PECTAB (102), au sein de la pluralité d'imprimantes à PECTAB;
dans lequel l'indication inclut des informations concernant un statut courant (222) de l'imprimante à PECTAB et l'identification d'informations (220) associées à cette imprimante à PECTAB (102);
au niveau de la station de travail un moteur de fourniture (344) pour fournir l'indication, *via* un protocole de message asynchrone et un serveur de protocole de message asynchrone, à une interface graphique utilisateur, 'GUI' d'un dispositif de support (110) des un ou plusieurs dispositifs de support (110); et
au niveau d'un ou plusieurs dispositifs de support un moteur d'affichage (346) pour amener un affichage, *via* le GUI, d'informations concernant un statut courant de l'imprimante à PECTAB (102) et des informations d'identification correspondantes associées à l'imprimante à PECTAB.

5. Système (100) selon la revendication 4, dans lequel le moteur de fourniture (344) fournit l'indication sans entrée utilisateur.

6. Système (100) selon la revendication 4, dans lequel la pluralité d'imprimantes à PECTAB (102) incluent une pluralité d'imprimantes de ticket et de carte d'embarquement automatiques, 'ATB', et dans lequel les instructions qui, lorsqu'exécutées par le processeur de la station de travail, amènent le processeur à implémenter le moteur d'identification (343) pour identifier l'indication de l'imprimante à PECTAB associée à l'événement du trafic associé à la pluralité d'imprimantes ATB.

7. Système (100) selon la revendication 4, dans lequel les informations d'identification identifient une version du micrologiciel correspondant à l'imprimante à PECTAB (102).

8. Procédé (480), comprenant:
la surveillance du trafic associé à une pluralité d'imprimantes (102) à table paramétrique, 'PECTAB', chacune ayant l'une respective d'une de la pluralité de stations de travail (104) lui correspondant, la pluralité de stations de travail (104) étant séparées et distinctes de la pluralité d'imprimantes, et le trafic étant surveillé au niveau de chacune des stations de travail (104) correspondantes;
par la station de travail correspondante, la réception, à partir du trafic surveillé, d'une indication d'une imprimante (102) de la pluralité d'imprimantes;
dans lequel l'indication inclut un statut courant (222) de l'imprimante et des informations d'identification associées à cette imprimante;
par la station de travail correspondante, la fourniture, *via* un protocole de message asynchrone et un serveur de protocole de message asynchrone, de l'indication à une interface graphique utilisateur (215) 'GUI' d'un dispositif de support (110) des un ou plusieurs dispositifs de support (110); et
l'affichage, *via* le GUI, du statut fourni *via* le protocole de message asynchrone.
